# EUROPEAN PATENT APPLICATION

(11) **EP 1 630 806 A2**
(43) Date of publication of application: **01.03.2006**
(21) Application number: 05254867.4
(22) Date of filing: 04.08.2005
(51) Int. Cl.: G11B 17/04

(54) **Tray movement speed control method and apparatus**

(30) Priority: 24.08.2004 KR 2004066712
(71) Applicant: Samsung Electronics Co., Ltd., Suwon-si, Gyeonggi-Do (KR)
(72) Inventor: Lee, Myoung-wook, Yeongtong-gu, Suwon-si Gyeonggi-do (KR); Ma, Byung-in, Jangan-gu, Suwon-si Gyeonggi-do (KR)
(74) Representative: Brandon, Paul Laurence

(57) **Abstract**

A tray movement speed control method and apparatus. The method of controlling a tray movement speed includes: receiving tray movement speed setting information through a user interface (221); receiving the tray movement speed setting information from the user interface (271) through a host interface (215); and setting a tray movement speed according to the received tray movement speed setting information. By allowing a user to adjust a loading speed set when a product is shipped, tastes and sensitivities of individual user groups may be satisfied and degradation of the recording and/or reproducing performance of a disc due to abnormal loading of a disc may be prevented.

## Description

The present invention relates to methods of controlling a tray movement speed, to tray movement control apparatus, methods of controlling loading/ejecting speed of a tray, to tray loading apparatus, and to methods of loading or ejecting a disc.

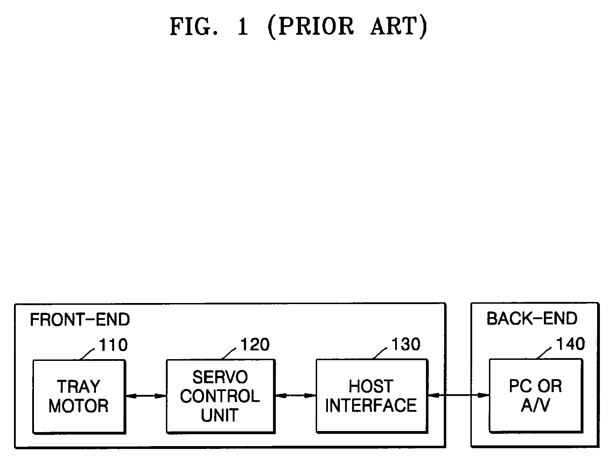

Disc loading systems are also referred to as a tray loading systems. FIG. 1 is a schematic block diagram of such a tray loading system according to the conventional technology. Referring to FIG. 1, the entire system for tray loading includes a front-end part and a back-end part. The front-end part includes a tray motor 110, a servo control unit 120, and a host interface 130.

The tray motor 110 is a motor to drive a tray. The servo control unit 120 controls the tray motor 110 so that the tray motor 110 runs at a predetermined speed. The host interface 130 mediates a transmission of information between the servo control unit 120 and a personal computer (PC) or an audio/video (A/V) player 140. The back-end part includes the PC or A/V player 140, receives a user command through a user interface and the like, and transfers the command to the host interface 130.

This conventional disc loading system of an optical disc loads and/or ejects a disc (open/close a tray) at a speed that is predetermined by a product maker. That is, the loading system of an optical disc currently on the market loads and/or ejects a disc at a speed predetermined by a product maker. A user cannot change this speed and the product maker does not have a set of commands for user to change the speed.

According to standards of conventional host interfaces (ATAPI, small computer system interface (SCSI, ATA, etc.) operations of relaying data between the front-end part and the back-end part, a tray load/eject command may be defined, but the speed of the tray may not be defined. Also, the disc tray is opened and/or closed by a predetermined constant or table to control the tray.

An aim of preferred embodiments of the present invention is to enable a user to adjust loading speed.

According to a first aspect of the present invention, there is provided a tray movement speed control method comprising: receiving tray movement speed setting information through a user interface; receiving the tray movement speed setting information from the user interface through a host interface; and setting a tray movement speed according to the received tray movement speed setting information.

The inventors of the present invention have realized that a loading speed that is predetermined when the product is shipped by the product maker may not satisfy the tastes and sensitivities of all user groups, and can also be an important point too buyers when selecting a product. In addition, dissatisfaction of some users in some aspects of a product may be reflected in evaluations of the quality of the product. Thus, the parameters for loading of a disc in order to solve this problem are difficult for a product maker to determine. Also, as thicknesses of PCs become slimmer and vertical installation of optical discs becomes more frequent due to the recent trend of slim PCs, a disc may be stuck in a tray or may be dropped into the tray when the tray is opened if loading speeds outside a correct range are chosen. Abnormal loading of a disc the recording and/or reproducing performance of the disc. Accordingly, when necessary, the driving speed (open/close) of a tray needs to be changed for reliability of an optical disc drive.

The receiving of the tray movement speed setting information through the user interface may include at least one of: receiving setting information to test the tray movement speed; receiving setting information to set the tray movement speed back to an initial speed set when the tray is first shipped; and receiving setting information to separately set the tray loading speed and tray ejecting speed.

The receiving of the tray movement speed setting information through the host interface may comprise: defining a command to set a speed in the standardized host interface and allocating a parameter to transfer a speed setting value in the defined command.

The setting of the tray movement speed may comprise: finding a movement speed value in a speed table having one or more movement speed values according to the received tray movement speed setting information, and setting the movement speed value as the tray movement speed.

According to another aspect of the present invention, there is provided a tray movement control apparatus comprising: a host interface receiving tray movement speed setting information input through a user interface; and a tray controller receiving the tray movement speed setting information from the host interface, and setting a tray movement speed according to the tray movement speed setting information.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a schematic block diagram of a tray loading system according to the conventional technology;
FIG. 2 is a diagram of the structure of a tray loading system according to an embodiment of the present invention;
FIG. 3 illustrates an example of a user interface for setting a tray speed;
FIG. 4 illustrates another example of a user interface for setting a tray speed;
FIG. 5 is a flowchart of the operations performed by a process for setting a tray speed according to an embodiment of the present invention; and
FIG. 6 is a flowchart of the operations performed by a process of loading or ejecting a disc according to an embodiment of the present invention.

Reference will now be made in detail to the present embodiments of the present invention, examples of which are illustrated in the accompanying drawings.

Preferred embodiments of the present invention provide a dedicated user interface (Ul) to set a speed by speed setting operation disposed in a PC or AN player that is a back-end part of an optical disc system. A tray loading/ejecting speed that is input by a user, in the back-end, is transferred to a tray controller through a host interface. An operation of speed setting is hereby completed. The present invention is applicable to substantially all apparatuses that perform such loading and/or ejecting operations by moving a tray motor and include an optical disc.

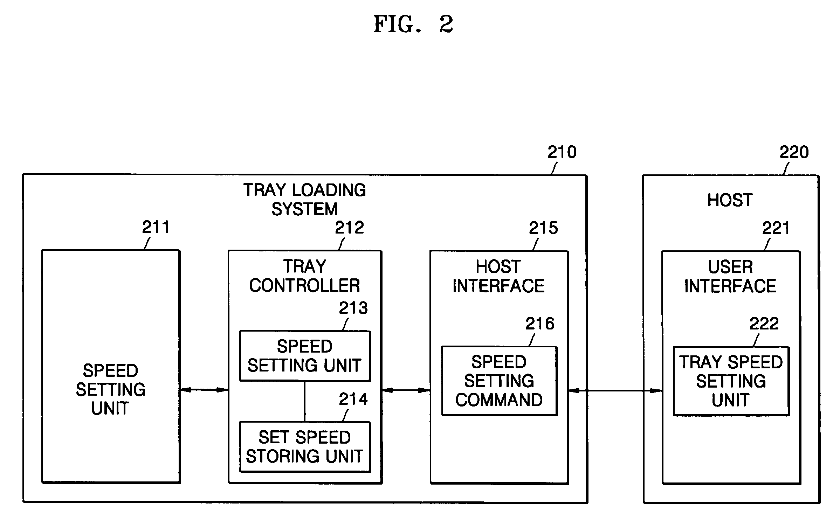

FIG. 2 is a diagram of the structure of a tray loading system according to an embodiment of the present invention. Referring to FIG. 2, a host 220 includes a user interface 221, and the user interface 221 includes a tray speed setting unit 222 to receive an input from a user of tray movement speed setting information. A dedicated menu to receive such an input of a speed to set this tray speed may be disposed to the user.

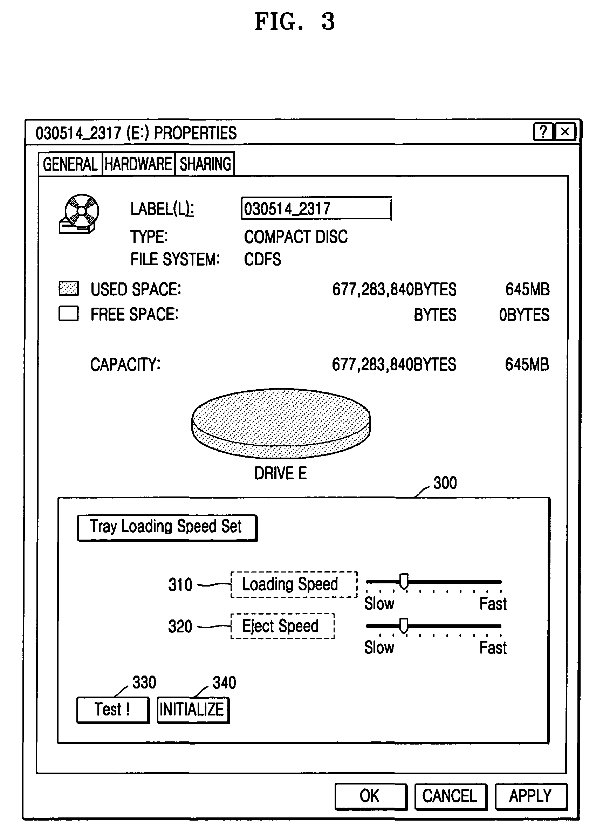

When a PC is used as a host, properties information of a drive or a separate UI for the inputting operation is disposed to a user. Through the PC acting as the host, an input of a tray loading speed is received. In operationally inputting a tray speed, load and eject commands are separately input. FIG. 3 illustrates an example of a menu to receive an input of a tray speed through a drive properties information setting menu in a PC.

Referring to FIG. 3, a tray loading speed setting menu 300 is shown in which a user may set a loading speed 310 and an ejecting speed 320 separately. In addition, each of the loading speed and the ejecting speed may be operationally and separately set from slow to fast and vice versa. Furthermore, a test menu 330 is disposed to the user so that the user may test a changed set speed, and an initialize menu 340 is disposed to the user so that the tray speed may be set back to the initial speed set when the apparatus to which the tray is attached is shipped from a product line.

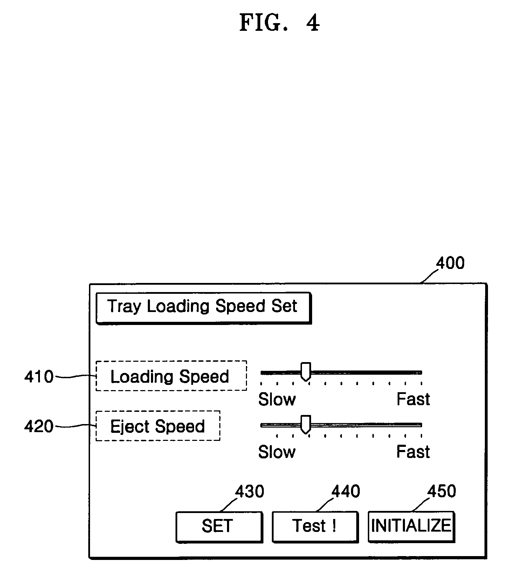

In case of an audio/visual (AN) set (a player, a recorder, etc.), a dedicated menu to set a tray speed is disposed to the user in a graphical user interface (GUI) of the AN set, and, through this GUI, an input of a tray loading speed is received. FIG. 4 illustrates a GUI in which a dedicated menu to set a speed in the A/V player and the like is disposed to the user.

Referring to FIG. 4, a tray loading speed setting menu 400 is shown in which a user may separately select and set one of a loading speed 410 and an ejecting speed 420. In addition, each of the loading speed and the ejecting speed may be operationally set from slow to fast. Furthermore, a test menu 440 is disposed to the user so that the user may test a changed set speed, and an initialize menu 450 is disposed to the user so that the tray speed may be set back to the initial speed set when the apparatus to which the tray is attached is shipped from a product line.

Referring again to FIG 2, the tray loading system 210 includes a tray driving motor 211, a tray controller 212, and a host interface 215. The tray driving motor 211 drives the tray, and the tray controller 212 controls the tray driving motor 211 so that the tray driving motor 211 runs at a predetermined speed. The host interface 216 mediates information transmission between the tray controller 212 and the Ul 221 of the host 220.

The host interface 216 will now be explained in more detail. The host interface 216 is connected to the UI and transfers the command of the UI to the tray controller 212 through a speed setting command 216. Examples of host interfaces 216 that may be used include ATAPI, SCSI and the like. In fact, however, whatever host interface is used, a new vendor specific command is defined in a reserved area, and speed setting information from the UI is transferred to the tray controller 212. At present, in the standardized host interface format such as ATAPI, SCSI, and ATA, a separate set of commands to set a tray speed and transmit data other than a load and/or eject command of a tray is not defined.

Accordingly, the set is defined in the reserved area that acts as a vendor specific command area and is allocated as such. Further, a parameter area to transfer a speed setting value in this command is defined and allocated such that tray movement speed setting information may be transferred.

The speed setting unit 213 of the tray controller 212 receives speed setting of the back-end part by a protocol predetermined with the host interface 215. In particular, according to an aspect of the present invention, the speed setting unit 213 stores the setting in a setting speed storing unit (non-volatile memory) 214, and, after that time, loads or ejects a disc in the tray according to this speed setting value. For example, the tray controller 212 has a multi-stepped speed table or formulas or values (not shown) to drive the tray. According to an embodiment of the invention, the tray controller 212 stores a speed table or formulas or values corresponding to the speed setting value corresponding to the tray speed setting information, received from the host interface 215, in a non-volatile memory so that even in a next power off, the values may be stored. The tray may then be driven with these values.

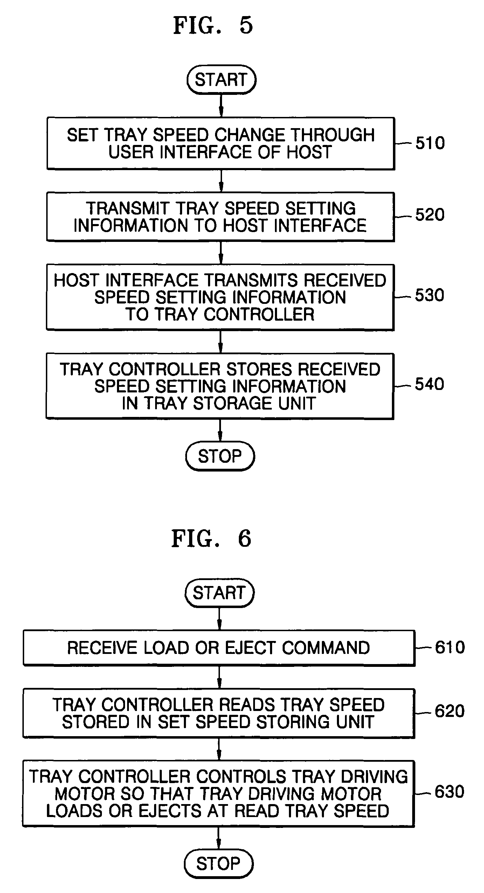

FIG. 5 is a flowchart of the operations performed by a process to set a tray speed according to the present invention. First, a tray speed change is set through a UI of a host in operation 510. As is described above, in a case where a PC is used, the tray speed setting menu may be offered with a drive properties information setting menu to a user, and, in a case where an A/V player is used, a dedicated tray speed setting menu may be provided to the user. Also, the tray loading speed and ejecting speed may be set separately and may be initialized.

The UI of the host receives the tray speed setting information from the user and transmits this tray speed setting information to the host interface in operation 520. Then, the host interface transmits the received speed setting information to a tray controller in operation 530. For example, by defining a new vendor specific command in a reserved area by using the ATAPI, SCSI, and the like, the host interface may transfer the speed setting information from the UI to the tray controller.

The tray controller stores the received speed setting information in a set speed storing unit in operation 540. For example, the tray controller has a multi-stepped speed table of formulas or values (not shown) to drive the tray, and stores a speed table of formulas or values corresponding to the speed setting value corresponding to the tray speed setting information received from the host interface, in the set speed storing unit.

FIG. 6 is a flowchart of the operations performed by a process of loading or ejecting a disc according to the present invention. If the tray controller receives a tray load or eject command in operation 610, the tray controller reads a tray speed stored in the set speed storing unit in operation 620. The tray controller controls a tray driving motor so that a disc is loaded onto or ejected from the tray at the tray speed read from the set speed storing unit in operation 630.

The tray movement speed control method, as described above, may also be embodied as computer readable codes on a computer readable recording medium. The computer readable recording medium is any data storage device that may store data which may be, thereafter, read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium may also be distributed over network coupled computer systems so that the computer readable code is stored and executed in a distributed fashion. Also, operational programs, codes, and code segments to accomplish aspects of the present invention may be easily construed by programmers skilled in the art to which the present invention pertains.

As described above, preferred embodiments of the present invention allow a user to adjust a loading speed set when a product is shipped, tastes and sensitivities of individual user groups may be satisfied and degradation of the recording and/or reproducing performance of a disc due to abnormal loading of a disc may be prevented.

Although a few embodiments of the present invention have been shown and described, it would be appreciated by those skilled in the art that changes may be made in these embodiments without departing from the principles of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A tray movement speed control method comprising:
receiving tray movement speed setting information through a user interface (221);
receiving the tray movement speed setting information from the user interface (221) through a host interface (215); and
setting a tray movement speed according to the received tray movement speed setting information.

2. The method of claim 1, wherein the receiving of the tray movement speed setting information through the user interface comprises at least one of:
receiving setting information to test the tray movement speed;
receiving setting information to set the tray movement speed back to an initial speed set when the tray is first shipped; and
receiving setting information to separately set the tray loading speed and tray ejecting speed.

3. The method of claim 1 or 2, wherein the receiving of the tray movement speed setting information through the host interface (215) comprises defining a command to set a speed in the standardized host interface (215) and allocating a parameter to transfer a speed setting value in the defined command.

4. The method of claim 1, 2 or 3, wherein the setting of the tray movement speed comprises finding a movement speed value in a speed table having one or more movement speed values according to the received tray movement speed setting information, and setting the movement speed value as the tray movement speed.

5. A tray movement control apparatus comprising:
a host interface (215) to receive tray movement speed setting information input through a user interface (221); and
a tray controller (212) to receive the tray movement speed setting information from the host interface (215), and to set a tray movement speed according to the tray movement speed setting information.

6. A method of controlling a loading/ejecting speed of a tray by a user, comprising:
receiving speed setting information from the user; and
setting the loading/ejecting speed according to the received tray movement speed setting information.

7. The method according to claim 6, wherein the receiving is accomplished through a user interface (221) including a speed setting unit (222) coupled to a host interface (215).

8. The method according to claim 6 or 7, wherein, where the tray is coupled to a PC, properties information of a drive or a separate user interface (UI) is disposed to the user.

9. The method according to claim 6, 7 or 8, further comprising providing the user with a menu to allow the user to set the loading speed and the ejecting speed.

10. The method according to claim 9, wherein each of the loading speed and the ejecting speed can be set from slow to fast or vice versa.

11. The method according to claim 9 or 10, further comprising:
providing a test menu to the user so that the user may test a changed set speed; and
providing an initialize menu to the user so that the tray speed is settable back to the initial speed.

12. The method according to claim 6 or 7, wherein where the tray is connected with an audio/visual (A/V) set including a player or a recorder, the method further comprises providing a menu to allow a user to set a tray speed in a graphical user interface (GUI) of the A/V set.

13. The method according to claim 12, further comprising providing the user with an opportunity to set either one of the loading speed and the ejecting speed separately.

14. The method according to claim 12 or 13, further comprising:
providing a test menu to the user so that the user may test a changed set speed; and
providing an initialize menu to the user so that the tray speed is settable back to the initial speed.

15. A tray loading apparatus including a user interface (Ul) (221) of a host (220) to receive a tray loading/ejecting speed setting command from a user, comprising:
a tray driving motor to drive the tray;
a tray controller (212) to control the tray driving motor so that the tray driving motor runs at a speed in accordance with the loading/ejecting speed setting command; and
a host interface (215) to mediate information transmission between the tray controller and the Ul (221) of the host (220).

16. The apparatus according to claim 15, wherein the host interface (215) transfers the command to the tray controller (212) through a speed setting command.

17. The apparatus according to claim 15 or 16, wherein the tray controller (212) comprises a speed setting unit (213) to receive a speed setting command.

18. The apparatus according to claim 17, wherein the speed setting unit (213) stores the setting of the speed setting command in a setting speed storing unit (214), and loads or ejects a disc in the tray according to the setting.

19. A method of loading or ejecting a disc from a host according to a speed set by a user, comprising:
receiving a tray loading or ejecting command;
reading a stored tray speed, which reflects the speed set by the user;
controlling a tray driving motor to load or eject the tray from the host at the read tray speed.

20. A computer readable medium having instructions to carry out the method according to claim 19.
